# EUROPÄISCHE PATENTSCHRIFT

(11) **EP 0 766 884 B1**
(45) Veröffentlichungstag und Bekanntmachung des Hinweises auf die Patenterteilung: **29.07.1998**
(21) Anmeldenummer: 95920706.9
(22) Anmeldetag: 22.06.1995
(51) Int. Cl.: H02K 9/20

(54) **KÜHLUNG FÜR EINEN MOTOR**
MOTOR-COOLING SYSTEM
SYSTEME DE REFROIDISSEMENT POUR MOTEUR

(30) Priorität: 23.06.1994 AT 1240/94
(43) Veröffentlichungstag der Anmeldung: 09.04.1997
(73) Patentinhaber: ELIN EBG Motoren GmbH, 1140 Wien (AT)
(72) Erfinder: BOLDLEHNER, Hans-Georg, A-8020 Graz (AT)
(74) Vertreter: Rieberer, Stefan, Dipl.-Ing.
(86) Internationale Anmeldenummer: AT9500126
(87) Internationale Veröffentlichungsnummer: WO9600462

(56) Entgegenhaltungen:
- FR-A- 2 091 722
- GB-A- 1 354 247
- US-A- 2 604 500
- US-A- 3 388 559

## Beschreibung

Die Erfindung betrifft eine Kühlung für einen getriebelosen Drehstromasynchron-Hochdrehzahlmotor, der Kühlkanäle zwischen dem Blechpaket und dem Gehäuse sowie im Gehäuse Anschlüsse für die Zu- und Abfuhr des Kühlmittels aufweist, wobei als Kühlmittel ein Freon als Zweiphasengemisch, im flüssig-gasförmigen Aggregatzustand vorgesehen ist.

Die GB-A-1 354 247 und die FR-A-2 091 722 offenbaren eine gattungsgemäße Kühlung für eine elektrische Maschine.

Ein Spezialgebiet für Motoren sind Hochdrehzahlmotoren mit Drehzahlen über 10.000 U/min. Die technischen Probleme bei so hohen Drehzahlen sind enorm und steigen exponentiell mit steigender Drehzahl und/oder Leistung.

Stand der Technik für derartige Hochdrehzahlmaschinen mit Drehzahlen bis 18.000 U/min. und Leistungen unter 100 kW ist die Gleichstromtechnik. Diese ist aber wegen der enormen Abnützungen der Bürsten im Dauerbetrieb mit hohen Kosten verbunden.

Die Beherrschung der biegekritischen Drehzahl ist eine der Schlüsselaufgaben bei der Entwicklung von Hochdrehzahlmotoren. Je geringer der Lagerabstand auf der Motorwelle ist, desto leichter beherrschbar wird die biegekritische Drehzahl. Der Forderung nach einer möglichst kurzen Motorwelle müssen alle anderen Konstruktionserfordernisse untergeordnet werden. Mit der Verkürzung des Lagerabstandes wird jedoch der Motor kompakter und dadurch werden die Kühlprobleme überproportional größer.

In der Praxis wird üblicherweise die Baulänge aufgrund der Berechnung der biegekritischen Drehzahl festgelegt und versucht, durch besondere Maßnahmen die Verlustwärme abzuführen. Dabei läßt es sich nicht vermeiden, daß die Bauteiltemperatur ansteigt, und man sich der Einsatzgrenze der verwendeten Werkstoffe nähert.

Aufgabe der Erfindung ist es, eine elektrisch rotierende Maschine, insbesondere einen Hochdrehzahlmotor zu schaffen, dessen Kühlung die Abführung der Verlustwärme gewährleistet, wobei auch keine ungleichmäßige Wärmeverteilung aufgebaut werden darf.

Die erfindungsgemäße Kühlung für einen getriebelosen Drehstromasynchron-Hochdrehzahlmotor ist, dadurch gekennzeichnet, daß über weitere im Gehäuse angeordnete Anschlüsse für die Zu- und Abfuhr eines Kühlmittels ein zweiter Kühlmittelfluß vorgesehen ist, wobei das Kühlmittel ein Freon im gasförmigen Aggregatzustand ist und über an sich bekannte radiale Kühlkanäle im Blechpaket für die Rotorkühlung heranziehbar ist.

Mit der Erfindung ist es erstmals möglich, hochdrehende Kompressoren für Kälteanlagen getriebelos anzutreiben, wobei für die elektrische Antriebsmaschine kein zusätzliches Kühlmedium erforderlich ist.

Wie ja an sich bekannt, werden für den Betrieb von Kälteanlagen Kältemittel wie Freon 22, durch dessen FCKW-Haltigkeit jetzt Freon 134 a, das ein teilhalogeniertes Kältemittel ist, eingesetzt.
Natürlich wird für die Kühlung des Kompressors ebenfalls dieses Kühlmittel eingesetzt.

Es liegt aber durchwegs nicht auf der Hand, dieses Kühlmittels für die Kühlung der elektrischen Maschine heranzuziehen. Bedenkt man, daß Freon nur ca. 1/5 der spezifischen Wärmekapazität von Wasser hat, bringt eine Wellenkühlung praktisch keinen Beitrag zur Wärmeabfuhr.
Mit dem Wegfall der Wellenkühlung sind auch deren Vorteile, wie eine niedrige Lagertemperatur und eine gleichmäßige Wärmeverteilung über die Welle in Frage gestellt.

Mit der erfindungsgemäßen Kühlmittelführung und Kühlgeometrie ist jedoch die Aufgabe der Erfindung gelöst.
Gemäß einem besonderen Merkmal der Erfindung weist das Zweiphasengemisch des 2Kühlmittels 60 bis 70 % Flüssigphase auf.

Insbesondere das Zweiphasengemisch des Kühlmittels zur Gehäusemantelkühlung hat Vorteile. So wird der tiefer als die Anschlüsse liegende Gehäuseteil mit der Flüssigphase gefüllt. Unter der Voraussetzung, daß das Blechpaket die Wärme gleichmäßig nach allen Richtungen abgibt, kommt es zu einer kontinuierlichen Verdampfung am ganzen Umfang. Darüber hinaus ist es aber auch bekannt, daß bei einer Wärmezufuhr, beispielsweise aus dem Blechpaket, es zu keiner Änderung der Kühlmitteltemperatur kommt, sondern es tritt der Verdampfungseffekt ein. D. h. der gasförmige Anteil des Zweiphasengemisches steigt und führt die Wärme ab.

Der erfindungsgemäße zweite Kühlmittelfluß stellt die Wärmeabfuhr aus dem Rotorbereich sicher. Dabei wird nur gasförmiges Kühlmittel verwendet.

Nach einem weiteren Merkmal der Erfindung sind die Anschlüsse für die Zu- bzw. Abfuhr des Kühlmittels am Umfang des Gehäuses versetzt angeordnet. Es ist einzusehen, daß je größer die Strecke des Kühlkanals ist, desto mehr Wärmeabfuhr ist gegeben. Durch die Konstruktion der Maschine mit ihren Füßen ist jedoch eine Anordnung der Anschlüsse diametral gegenüber schwer möglich.

Gemäß einer besonderen Ausgestaltung der Erfindung sind die Anschlüsse für die Abfuhr des Kühlmittels am Zenit des Gehäuses angeordnet. Vorteilhaft dabei ist, daß alle Anschlüsse für die Abfuhr des Kühlmittels in einer Ebene liegen. Darüber hinaus wird natürlich die Abfuhr des gasforigen Kühlmittels am höchsten Punkt der elektrischen Maschine begünstigt.

Nach einem weiteren Merkmal der erfindung sind die Anschlüsse für die Zufuhr des Zweiphasengemisches etwa um einen Winkel von + 120° zu den Anschlüssen für die Abfuhr versetzt angeordnet. Eine derartige Kühlgeometrie hat gezeigt, daß die Wärmeabfuhr vom Blechpaket durchaus gewährleistet ist. Wie bereits erwähnt, füllt sich der gegenüber den Anschlüssen tieferliegende Bereich der Maschine mit der Flüssigphase des Gemisches.

Gemäß einer besonderen Ausgestaltung der Erfindung sind die Anschlüsse für die Zufuhr des gasförmigen Kühlmittels um + 90°, vorzugsweise in der Horizontalebene des Motors, versetzt zu den Anschlüssen für die Abfuhr vorgesehen. Dadurch ist die Temperaturverteilung des zweiten Kühlmittelflusses symmetrisch zur Temperaturverteilung des Gehäuse-Kühlmittelflusses.

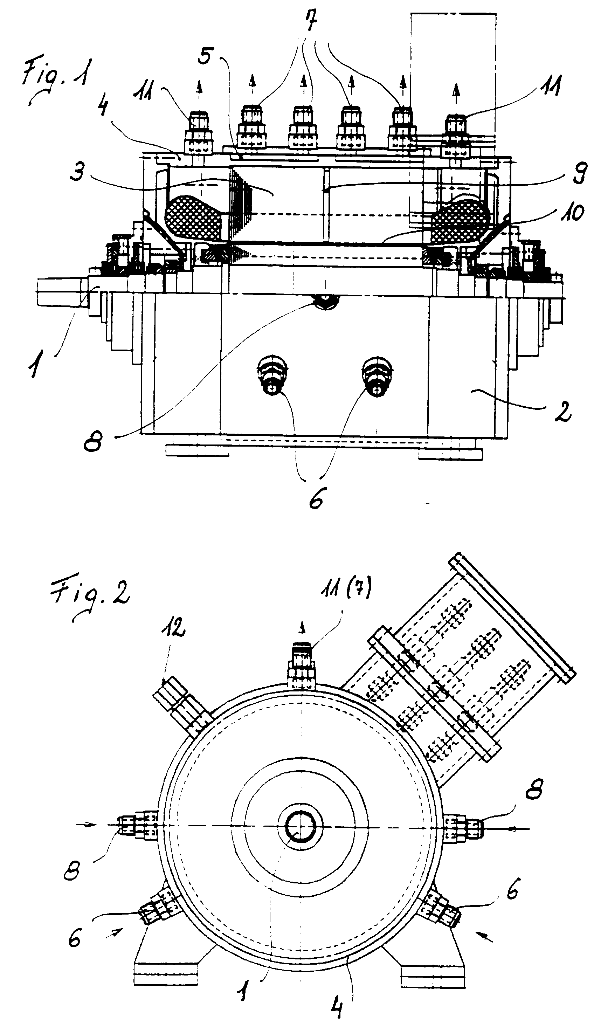

Die Erfindung wird anhand eines in der Zeichnung dargestellten Ausführungsbeispieles näher erläutert. Fig. 1 zeigt eine Maschine teilweise im Schnitt und Fig. 2 die Anordnung der Anschlüsse am Umfang.

Gemäß Fig. 1 ist ein Drehstrom-Asynchron-Motor für höchste Drehzahlen mit dem Rotor 1 und dem Stator 2 dargestellt. Dieser Motor soll hochdrehende Kompressoren für Kälteanlagen direkt, also ohne Getriebe, antreiben und Drehzahlen von 18.000 U/min bei einer Leistung von etwa 230 kW erreichen. Als Kühlmittel für den Motor soll das gleiche Kühlmittel wie das des Kompressors Verwendung finden.

Als Kühlmittel wird ein Freon, bekannt auch unter der Handelsbezeichnung Frigen, das ein Sicherheitskältemittel gemäß 56 Römpp, S 1744 ff, Chemie Lexikon ist. verwendet. Prinzipiell sind jedoch viele organische Kältemittel mit einer geringen Wärmekapazität gegenüber Wasser einsetzbar.

Betrachet man den Hochdrehzahlmotor mit einer Leistung von 230 kW bei einem angestrebten Wirkungsgrad von 92 % unter Auslegungslast so müssen rund 18 kW Verlustleistung abgeführt werden.

Die Motorabmessungen aufgrund der biegekritischen Drehzahl betragen ca. 400 mm Gehäusedurchmesser und rund 540 mm Gehäuselänge. In diesem äußerst kompakten Motor entsteht die zitierte Verlustleistung von 18 kW. Diese wird nicht nur mit entsprechender Sicherheit abgeführt, sondern es darf sich auch keine ungleichmäßige Wärmeverteilung mit Hotspots über einzelne Bauteile aufbauen. Selbstverständlich werden die zulässigen Materialtemperaturen nicht überschritten.

Der Motor weist im Stator 2 zwischen dem Blechpaket 3 und dem Gehäuse 4 Kühlkanäle 5 auf. Im Gehäuse 4 sind Anschlüsse 6 für die Kühlmittelzufuhr und Anschlüsse 7 für die Kühlmittelabfuhr vorgesehen. Für die Gehäusemantelkühlung wird das Kühlmittel im Zweiphasengemisch mit einem Druck von etwa 2,7.bar eingeleitet.

Gemäß der Fig. 2 wird der gegenüber den Anschlüssen 6 tiefer liegende Bereich des Motors mit der Flüssigphase des Kühlmittels gefüllt.

Gibt nun das Blechpaket 3 die Wärme gleichmäßig nach allen Richtungen ab, so kommt es zu einer kontinuierlichen Verdampfung am ganzen Umfang. Das gasförmige Kühlmittel wird dann bei den Anschlüssen 7 abgesaugt. Die Wärmeübergangszahl bleibt am Umfang konstant.

Darüber hinaus weist der Hochdrehzahlmotor einen zweiten Kühlmittelfuß auf. Über die Anschlüsse 8 wird für die Rotorkühlung gasförmiges Kühlmittel mit einem Druck von etwa 2,7 bar eingebracht. Durch die Kühlkanäle 9 des Blechpaketes 3 wird dieses gasförmige Kühlmittel in den Luftspalt 10 zwischen Rotor 1 und Blechpaket 3 geführt. Die Abführung dieses Kühlmittels erfolgt über die Anschlüsse 11.

Über einen Temperatursensor 12 kann die Kühlmitteltemperatur erfaßt werden. Aufgrund dieser kann sehr wohl auf die Maschinentemperatur geschlossen werden.

Die Anordnung der Anschlüsse 7 bzw. 11 am Zenit der Maschine sowie die Anordnung der Anschlüsse 6 bzw. 8 in einem Winkel von etwa 120° bzw. 90° für die Kühlmittelzufuhr ergibt auch rechnerisch eine gute Kühlgeometrie.

## Patentansprüche

1. Kühlung für einen getriebelosen Drehstromasynchron-Hochdrehzahlmotor, der Kühlkanäle (5) zwischen dem Blechpaket (3) und dem Gehäuse (4) sowie im Gehäuse (4) Anschlüsse (6, 7) für die Zu- und Abfuhr des Kühlmittels aufweist, wobei als Kühlmittel ein Freon als Zweiphasengemisch, im flüssig-gasförmigen Aggregatzustand vorgesehen ist, dadurch gekennzeichnet, daß über weitere im Gehäuse (4) angeordnete Anschlüsse (8 bzw. 11) für die Zu- und Abfuhr eines Kühlmittels ein zweiter Kühlmittelfluß vorgesehen ist, wobei das Kühlmittel ein Freon im gasförmigen Aggregatzustand ist und über an sich bekannte radiale Kühlkanäle (9) im Blechpaket (3) für die Rotorkühlung heranziehbar ist.

2. Kühlung nach Anspruch 1, dadurch gekennzeichnet, daß das Zweiphasengemisch des Kühlmittels 60 bis 70 % Flüssigphase aufweist.

3. Kühlung nach Anspruch 1 oder 2, dadurch gekennzeichnet, daß die Anschlüsse (6, 8 bzw. 7, 11) für die Zu- bzw. Abfuhr des Kühlmittels am Umfang des Gehäuses (4) versetzt angeordnet sind.

4. Kühlung nach einem der Ansprüche 1 bis 3, dadurch gekennzeichnet, daß die Anschlüsse (7, 11) für die Abfuhr des Kühlmittels am Zenit des Gehäuses angeordnet sind.

5. Kühlung nach einem der Ansprüche 1 bis 4, dadurch gekennzeichnet, daß die Anschlüsse (6) für die Zufuhr des Zweiphasengemisches etwa um einen Winkel von 120° zu den Anschlüssen (7) für die Abfuhr versetzt angeordnet sind.

6. Kühlung nach einem der Ansprüche 1 bis 5, dadurch gekennzeichnet, daß die Anschlüsse (8) für die Zufuhr des gasförmigen Kühlmittels um 90°, vorzugsweise in der Horizontalebene des Motors, versetzt zu den Anschlüssen (11) für die Abfuhr vorgesehen sind.

## Claims

1. Cooling system for a gearless rotary current asynchronous motor of a high number of revolutions comprising cooling channels (5) between the stack of sheets (3) and the housing (4), and connections (6,7) for supplying and discharging a cooling agent within the housing (4), freon as a two phase mixture in a liquid/gaseous physical condition being provided as the cooling agent, characterised in that a second cooling circuit is provided through further connections (8 or 11) for supplying and discharging a cooling agent within the housing (4), said cooling agent being freon in gaseous physical condition and being useable for cooling the rotor via radial cooling channels (9) known *per* se within said stack of sheets (3).

2. Cooling system according to claim 1, characterised in that said two phase mixture of the cooling agent comprises 60 to 70% of liquid phase.

3. Cooling system according to claim 1 or 2, characterised in that said connections (6,8 or 7,11) for supplying and discharging said cooling agent are arranged offset at the periphery of said housing (4).

4. Cooling system according to any of claims 1 to 3, characterised in that said connections (7,11) for discharging said cooling agent are arranged at the zenith of said housing.

5. Cooling system according to any of claims 1 to 4, characterised in that said connections (6) for supplying said two phase mixture are arranged offset relative to said connections (7) for discharging by an angle of about 120°.

6. Cooling system according to any of claims 1 to 5, characterised in that said connections (8) for supplying said gaseous cooling agent are provided offset relative to said connections (11) for discharging by 90°, preferably in the horizontal plane of said motor.

## Revendications

1. Système de refroidissement pour un moteur asynchrone à courant triphasé à vitesses de rotation élevées, ne comportant pas de réducteur, le système de refroidissement présentant des canaux de refroidissement (5) entre l'empilage de tôles (3) et le carter (4), ainsi que dans le carter (4), des raccordements (6, 7) pour l'amenée et l'évacuation du fluide de refroidissement, le fluide de refroidissement prévu étant un Fréon en tant que mélange à deux phases, dans l'état physique liquide-gazeux, **caractérisé** en ce que par l'intermédiaire d'autres raccords (8 et respectivement 11) placés dans le carter (4) et destinés à l'amenée et à l'évacuation d'un fluide de refroidissement, il est prévu un second flux de fluide de refroidissement, le fluide de refroidissement étant un Fréon dans l'état physique gazeux et pouvant être utilisé pour le refroidissement du rotor par l'intermédiaire de canaux de refroidissement (9) d'orientation radiale, connus en soi et réalisés dans l'empilage de tôles (3).

2. Système de refroidissement selon la revendication 1, **caractérisé** en ce que le mélange à deux phases du fluide de refroidissement présente 60 à 70% de phase liquide.

3. Système de refroidissement selon la revendication 1 ou 2, **caractérisé** en ce que les raccords (6, 8 et respectivement 7, 11) pour l'amenée et respectivement l'évacuation du fluide de refroidissement sont disposés de manière décalée sur la périphérie du carter (4).

4. Système de refroidissement selon l'une des revendications 1 à 3, **caractérisé** en ce que les raccords (7, 11) pour l'évacuation du fluide de refroidissement sont disposés au zénith du carter.

5. Système de refroidissement selon l'une des revendications 1 à 4, **caractérisé** en ce que les raccords (6) pour l'amenée du mélange à deux phases sont disposés de manière décalée d'un angle d'environ 120° par rapport aux raccords (7) pour l'évacuation.

6. Système de refroidissement selon l'une des revendications 1 à 5, **caractérisé** en ce que les raccords (8) pour l'amenée du fluide de refroidissement gazeux sont prévus de préférence dans le plan horizontal du moteur, de manière décalée de 90 ° par rapport aux raccords (11) pour l'évacuation.
